# EUROPÄISCHE PATENTANMELDUNG

(11) **EP 1 736 766 A2**
(43) Veröffentlichungstag der Anmeldung: **27.12.2006**
(21) Anmeldenummer: 06012663.8
(22) Anmeldetag: 20.06.2006
(51) Int. Cl.: G01N 29/04, G01N 29/14, G01N 29/34, G01N 29/22, B07C 5/342, G01M 7/02

(54) **Verfahren zum Handhaben und Prüfen von Werkstücken sowie Vorrichtung zur Durchführung des Verfahrens**

(30) Priorität: 22.06.2005 DE 102005028920
(71) Anmelder: SKS Holding Gmbh, 09366 Niederdorf (Erzgeb.) (DE)
(72) Erfinder: Kutz, Matthias, 08280 Aue (DE); Graf, Bastian, 08525 Plauen (DE)
(74) Vertreter: Oberdorfer, Jürgen

(57) **Zusammenfassung**

Die Erfindung betrifft ein Verfahren zum Handhaben und Prüfen von Werkstücken, insbesondere von dünnen, plattenartigen Prüfsubstraten (100), wobei das Prüfsubstrat (100) zur Erkennung von Fehlern und/oder Beschädigungen in einer Prüfoperation (2) einer Schallprüfung unterzogen wird, wobei das Prüfsubstrat (100) in Schwingung versetzt wird und Schall, welcher vom Prüfsubstrat (100) abgegeben wird, mittels einem Schallsensor (11) gemessen, und ein Messsignal einer Signalauswerteeinrichtung zugeführt und ausgewertet wird, wobei das Prüfsubstrat (100) zumindest einer weiteren Prüf- und/oder Sortieroperation (3, 4) zur Prüfung zumindest eines weiteren Prüfkriteriums und/oder zur Ermittlung zumindest eines Sortierkriteriums unterzogen wird sowie eine Vorrichtung zum Durchführen des Verfahrens.

## Beschreibung

Die Erfindung betrifft ein Verfahren zum Handhaben und Prüfen von Siliziumscheiben für die Solarzellenherstellung nach dem Oberbegriff des Anspruchs 1 sowie eine Vorrichtung zum Durchführen des Verfahrens nach dem Oberbegriff des Anspruchs 16.

Hersteller von Solarzellen beziehen üblicherweise Siliziumscheiben (sogenannte wafer) von Halbleiter- bzw. Halbleiterchipherstellern in unterschiedlichen Qualitäten. Geliefert werden z. B. Siliziumscheiben in unterschiedlicher Qualität in unregelmäßiger Aufeinanderfolge. Üblicherweise werden derartige Siliziumscheiben paketweise zu beispielsweise 50 oder 100 Stück beim Hersteller der Solarzellen angeliefert. In einem Paket können Siliziumscheiben unterschiedlicher Qualitäten vorhanden sein. Die Siliziumscheiben können beispielsweise Haarrisse aufweisen, fehlerhafte Konturen besitzen oder Fehler im Aufdruck und Farbunterschiede aufweisen. Weiterhin können die Siliziumscheiben Transportbeschädigungen erfahren haben. Bislang wird beim Hersteller der Solarzellen eine manuelle Eingangsüberprüfung der angelieferten Siliziumscheiben durchgeführt, wobei eine manuelle Entnahme einzelner Siliziumscheiben aus den Paketen erfolgt. Eine Prüfperson überprüft, ob Ausbrechungen an der Kontur vorhanden sind und führt eine Farbeinordnung durch. Zur Feststellung, ob die angelieferten Siliziumscheiben unsichtbare Haarrisse aufweisen, versetzt die Prüfperson die zu prüfende Siliziumscheibe beispielsweise durch Schütteln in eine Schwingung. Dies verursacht eine Schallabgabe durch die in Schwingung versetzte Siliziumscheibe. Die Prüfperson erkennt anhand des abgegebenen Tons, ob es sich um eine haarrissfreie oder eine fehlerhafte Siliziumscheibe handelt und entscheidet dann, ob es sich um Ausschuss oder um eine verwertbare Siliziumscheibe handelt. Die weiter verwertbaren Siliziumscheiben werden üblicherweise wiederum einer Verpackung abgelegt und z. B. nach Farben sortiert dem weiteren Herstellprozess für die Solarzellen zugeführt. Bei dieser derzeit gängigen Eingangsprüfung ist von Nachteil, dass hierfür ein hoher manueller Aufwand erforderlich ist und zudem geschultes Prüfpersonal erforderlich ist, welches zuverlässig anhand des abgestrahlten Schalls feststellen kann, ob eine fehlerhafte Siliziumscheibe vorliegt oder nicht. Außerdem erfolgt z. B. die Farbeinordnung durch die Prüfperson subjektiv, so dass eine zuverlässige objektive Farbsortierung nicht immer gewährleistet ist.

Aus der DE 103 45 577 A1 ist eine Vorrichtung zur Haarrissprüfung von Siliziumscheiben zur Bildung von Solarzellen bekannt, bei der eine dünne zu überprüfende Siliziumscheibe mittels einer Aufnahmevorrichtung gehandhabt wird und mittels eines Schallgenerators mit Schall beaufschlagt wird. Gegenüberliegend vom Schallgenerator ist ein Messwertaufnehmer angeordnet. Der Messwertaufnehmer empfängt den Schall, der von der zu prüfenden Siliziumscheibe abgestrahlt wird und leitet einen Messwert einer Auswerteeinrichtung zu. Die angegebene Vorrichtung hat sich hinsichtlich ihrer Funktion nicht bewährt. Eine zuverlässige Erkennung von schadhaften Siliziumscheiben war nicht möglich. Außerdem ist bei einer derartigen Prüfmethode nach wie vor eine manuelle Prüfung der übrigen Prüfkriterien durch eine Prüfperson erforderlich.

Aufgabe der Erfindung ist es, ein automatisiertes Handhabungs- und Prüfverfahren für Werkstücke, insbesondere flachplattenartige Werkstücke, wie z. B. Siliziumscheiben anzugeben, mit dem verschiedene Prüfkriterien einfach und automatisch abgearbeitet werden können. Weiterhin soll eine hohe Prüfsicherheit und eine zuverlässige Sortierung erfolgen. Weiterhin ist es auch Aufgabe der Erfindung, ein Verfahren und eine Vorrichtung anzugeben, welche unterschiedliche Prüfergebnisse durch subjektive Wahrnehmung einer Prüfperson vermeiden. Außerdem soll die Erfindung eine kostengünstige und zuverlässige Eingangsprüfung ermöglichen.

Diese Aufgaben werden mit einem Verfahren zum Handhaben und Prüfen von Werkstücken mit den Merkmalen des Anspruchs 1 und mit einer Vorrichtung zum Durchführen des Verfahrens mit den Merkmalen des Anspruchs 16 gelöst. Vorteilhafte Ausführungsformen sind den jeweils von den unabhängigen Ansprüchen abhängigen Ansprüchen angegeben.

Im Folgenden wird die Erfindung anhand der Zeichnung beispielhaft näher erläutert es zeigen:
- Figur 1:: schematisch einen Prüfablauf einer Ausführungsform eines erfindungsgemäßen Verfahrens;
- Figur 2:: schematisch eine erste Ausführungsform einer erfindungsgemäßen Vorrichtung zum Durchführen des Verfahrens;
- Figur 3:: schematisch eine Vorderansicht auf eine zweite Ausführungsform einer erfindungsgemäßen Vorrichtung zum Durchführen des Verfahrens in einer Ausgangsstellung;

- Figur 4:: schematisch die zweite Ausführungsform der erfindungsgemäßen Vorrichtung gemäß Figur 3 in einer Seitenansicht;
- Figur 5:: schematisch die zweite Ausführungsform der erfindungsgemäßen Vorrichtung gemäß Figur 3 in einer Prüfstellung; und
- Figur 6:: schematisch die zweite Ausführungsform der erfindungsgemäßen Vorrichtung gemäß Figur 4 in Prüfstellung.

Die nachfolgende Beschreibung einer möglichen Ausführungsform des erfindungsgemäßen Verfahrens wird anhand einer Eingangsprüfung von dünnwandigen Siliziumplatten zur Herstellung von Solarzellen beschrieben. Das erfindungsgemäße Verfahren ist aber nicht auf diesen Anwendungsfall beschränkt und kann insbesondere auf flachplattenförmige Bauteile aus anderen Materialien oder auf Prüflinge mit anderen Geometrien mit Vorteil angewandt werden.

Die in der nachfolgend beschriebenen Verfahrensabfolge zu prüfenden Prüfsubstrate 100, z. B. die Siliziumscheiben, besitzen eine in etwa quadratische Umfangskontur mit einer Kantenlänge von z. B. 200 mm. Die Siliziumscheiben sind mono- oder polykristalline Platten, welche sich in der Farbe unterscheiden können. Beispielsweise kommt es vor, dass die Platten ins rötliche, grünliche oder bläuliche tendieren. Bei der Solarzellenherstellung ist es jedoch wünschenswert, nur gleichfarbige Siliziumplatten in einer Solarzelle zu integrieren, da dies den optischen Eindruck der Solarzelle wesentlich verbessert. Somit ist eine Sortierung nach Farben erforderlich. Außerdem können die Siliziumscheiben ein bestimmtes Oberflächenbild, z. B. bestehend aus Leiterbahnen oder verschiedenen Ätzungen oder Aufdrucken besitzen. Die Prüfung der Fehlerfreiheit des Oberflächenbilds muss zuverlässig erfolgen, um keine fehlerhaften Siliziumscheiben in den nachfolgenden Herstellprozess gelangen zu lassen. Außerdem kann es vorkommen, dass die Siliziumscheiben, insbesondere Siliziumscheiben minderer Qualität, Ausbrüche oder Konturfehler aufweisen. Ein derartiges Auftreten von Ausbrüchen oder Konturfehlern muss dazu führen, dass die entsprechende Siliziumscheibe zuverlässig als Ausschuss erkannt und aussortiert wird. Ein weiteres Prüfkriterium stellt die Prüfung auf Haarrisse dar, welche nicht ohne weiteres optisch erkennbar sind.

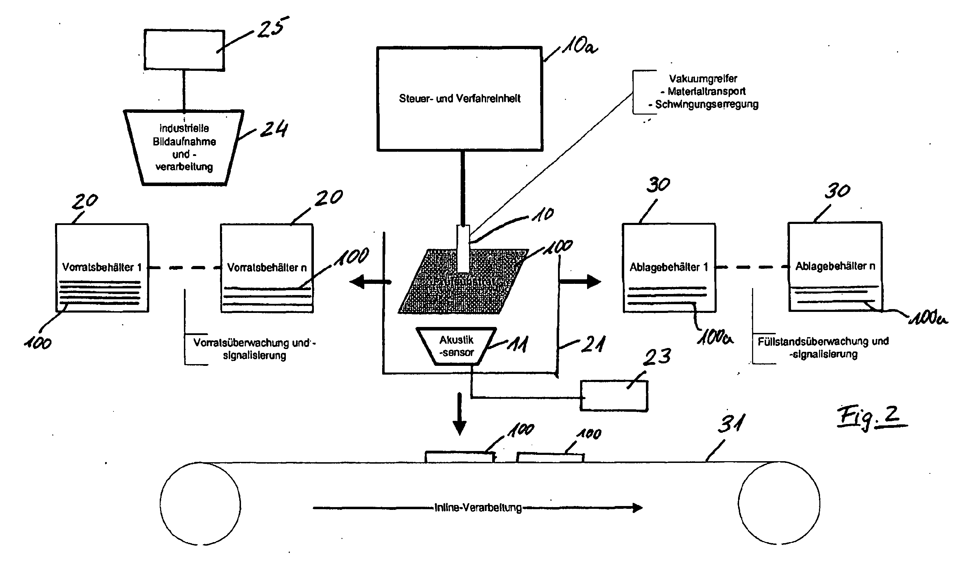

Im folgenden wird verallgemeinernd für die Siliziumscheibe der Begriff "Prüfsubstrat 100"(vgl. Figur 2) verwendet. Selbstverständlich sind je nach zu prüfendem Prüfsubstrat 100 weitere Prüfkriterien und/oder Sortierkriterien denkbar, welche mit dem erfindungsgemäßen Verfahren vorteilhaft abgearbeitet werden können.

Die Prüfung auf Haarrisse gemäß der Erfindung basiert auf einer Schallmessung eines von einem in Schwingung versetzten Prüfsubstrat 100 abgesandten Schalls. Der abgesandte Schall weist in Abhängigkeit der Geometrie des Prüfsubstrats 100 und der Materialeigenschaften des Prüfsubstrats 100 charakteristische Eigenschaften z. B. hinsichtlich seines zeitlichen Amplitudenverlaufs und/oder seiner Frequenz auf, welche gemessen und in einer Auswerteeinheit mit einem Referenzsignal/Referenzschablone verglichen werden. Abweichungen von dem charakteristischen Prüfsubstratschall (Referenzsignal/Referenzschablone), können als Indikator für einen Fehler, z. B. einen Haarriss herangezogen werden.

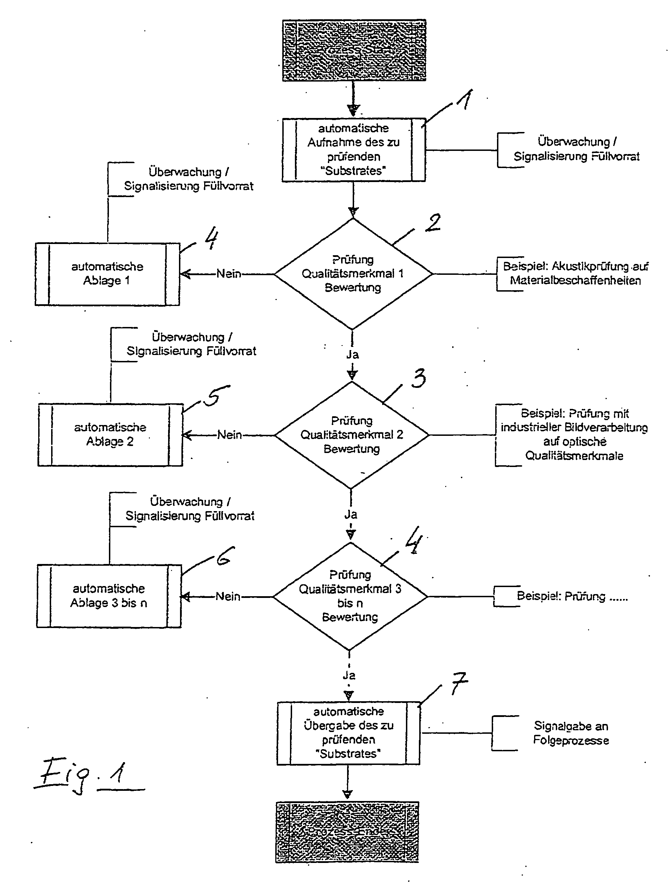

Basierend auf den oben genannten Definitionen wird nunmehr das Verfahren anhand von Figur 1 beschrieben.

In einem ersten Verfahrensschritt werden angelieferte Prüfsubstrate 100 (Siliziumscheiben) aus einer Anlieferungsverpackung entnommen und in einen ersten Vorratsbehälter als Stapel gegeben. Aus dem Vorratsbehälter werden mittels einer Handhabungseinrichtung 10 (vgl. Figur 2) einzelne Prüfsubstrate 100 automatisch aufgenommen, beispielsweise mittels eines Sauggreifers einzeln vom Prüfsubstratstapel entnommen, so dass eine automatische Aufnahme 1 des zu prüfenden Substrats 100 erfolgt. Nach der automatischen Aufnahme 1 des zu prüfenden Substrats 100 wird das zu prüfende Substrat 100 in einer ersten Prüfoperation 2 auf ein erstes Qualitätsmerkmal überprüft. Das erste Qualitätsmerkmal ist z. B die Prüfung auf Haarrissfreiheit basierend auf einer Schallmessung eines charakteristischen "Schallbilds" des Prüfsubstrats 100, welche weiter unten näher erläutert wird.

Sofern die Prüfung der ersten Prüfoperation 2 positiv verläuft, wird das Prüfsubstrat 100 mittels der Handhabungseinrichtung 10 einer zweiten Prüfoperation 3 und/oder Sortieroperation zugeführt. Wenn die Prüfung der ersten Prüfoperation 2 negativ verläuft, wird das Prüfsubstrat 100 einer ersten Ablage 4 zugeführt, in der Ausschuss aufgrund des ersten Prüfkriteriums gesammelt wird. Besonders bevorzugt wird der Füllgrad der Ablage 4 überwacht und die Ablage 4 bei vollständiger Befüllung durch eine leere Ablage 4 ersetzt.

In der zweiten Prüfoperation 3 wird beispielsweise eine Farbprüfung des Prüfsubstrats 100 durchgeführt, welche mittels industrieller Bildverarbeitung erfolgt. In einem Datenspeicher sind hierbei verschiedene Farbvergleichs- und Farbtoleranzwerte hinterlegt. Die Oberflächenfarbe des zu prüfenden Substrats 100 wird mit den hinterlegten Farbtoleranzen und/oder Farbwerten verglichen. Sofern die Prüfung der Oberflächenfarbe ergibt, dass das geprüfte Substrat 100 der Farbanforderung entspricht, wird das Prüfsubstrat 100 einer der Farbe entsprechenden Sammeleinrichtung und/oder ggf. einer weiteren Prüfoperation 4 zugeleitet. Alternativ werden die Prüfsubstrate 100 je nach erkanntem Farbwert nach Farbwerten sortiert in Ablagen abgelegt, wobei die Prüfsubstrate somit eine Farbsortierung erfahren. Die Prüfsubstrate 100 werden ggf. einer weiteren Prüfoperation 4 zugeführt oder an einen nachfolgenden Herstellprozess für Solarzellen weitergegeben. Wenn die Prüfung der Prüfoperation 3 negativ verläuft, wird das Prüfsubstrat 100 einer weiteren Ablage 5 (Ausschussablage) zugeführt, welche ggf. wiederum hinsichtlich der Füllung überwacht wird.

Besonders bevorzugt können in der zweiten Prüfoperation 3 weitere Überprüfungen von optisch erfassbaren Merkmalen erfolgen, wobei z. B. die Umfangskontur und/oder das Oberflächenbild z. B. hinsichtlich der Leiterbahnen mittels industriellen Bildaufnahme- und Verarbeitungsverfahren erfasst, geprüft und bewertet werden.

In der dritten oder in folgenden Prüfoperationen 4 können weitere Prüfkriterien des zu prüfenden Substrats 100 abgearbeitet werden. In Frage kommen hierfür zum Beispiel das Gewicht, oder vergleichbare Prüfkriterien. In der dritten oder in fortfolgenden Prüfoperationen 4 werden jeweils bei negativem Ausgang der Prüfung und negativer Bewertung des entsprechenden Prüfkriteriums Ausschusssubstrate in eine entsprechende Ausschussablage 6 übergeführt und abgelegt. Am Ende des gesamten Prüfzyklussees, d. h. am Ende der dritten oder n-ten Prüfoperation, erfolgt bei positiver Gesamtprüfung des Substrats 100 eine automatische Übergabe des für in Ordnung befundenen Substrats 100 an einen Nachfolgeprozess, z. B. den Herstellprozess von Solarzellen. Dieser Verfahrensschritt ist mit dem Bezugszeichen 7 gekennzeichnet. Nach der Übergabe der für in Ordnung befundenen Prüfsubstrate 100 an den Nachfolgeprozess ist das automatisierte Handhabungs- und Prüfverfahren gemäß der Erfindung beendet.

Bevorzugt werden Sortieroperationen zeitlich nach der oder den Prüfoperationen durchgeführt.

Während des gesamten Prüfverfahrens wird das Prüfsubstrat 100 vorzugsweise mittels einer Handhabungseinrichtung 10, z. B. einem Sauggreifer 10 (vgl. Figur 2) von einer Prüfstation zur nächsten bewegt. Die Handhabungseinrichtung 10 ist z. B. mit einer Verfahreinheit 10a verbunden. Die Verfahreinheit 10a ist z. B. ein Industrieroboter oder ein Linearförderer oder dergleichen. Sofern es erforderlich ist, kann während einer bestimmten Prüfoperation eine vorübergehende Trennung des Prüfsubstrats 100 von der Handhabungseinrichtung 10 und eine Ablage des Prüfsubstrats 100 in einer Prüfstation erfolgen. Bei der Prüfoperation 2, nämlich der Haarrissprüfung 100 wird das Prüfsubstrat 100 in eine Prüfkammer (nicht gezeigt) bewegt, in der ein Schallsensor 11 (vgl. Fig. 2) angeordnet ist. In der Prüfkammer wird das Prüfsubstrat 100 (hier: die Siliziumscheibe) in Schwingung versetzt, so dass vom Prüfsubstrat 100 eine Schallemission hin zum Schallsensor 11 erfolgt.

Die Schwingungserregung kann auf verschiedene Art und Weise erfolgen. Beispielsweise kann das Prüfsubstrat 100 mit einem Anregungskörper, z.B. einem Schwingerreger, in Kontakt gebracht werden, so dass sich ein Körperschall vom Anregungskörper oder Schwingerreger auf das Prüfsubstrat 100 überträgt und somit dieses in Schwingung versetzt.

Hierbei steht bevorzugt der Schwingerreger mit einem Frequenzgenerator in Verbindung, so dass der Schwingerreger eine Schwingung mit definiertem zeitlichen und amplitudenmäßigen Verlauf auf das Prüfsubstrat 100 in direktem Kontakt mit diesem überträgt. Das Prüfsubstrat 100 wird hierdurch in Schwingung versetzt und gibt eine Schallemission ab, die von dem Schallsensor 11, der als Messwertaufnehmer wirkt, aufgenommen und einer Signalverarbeitungseinrichtung, z.B. einer Mess- und Auswerteeinheit 23 zugeleitet wird. In der Mess- und Auswerteeinrichtung 23 ist eine Referenzsignalschablone abgelegt, die für ein fehlerfreies, d.h. haarrissfreies Substrat charakteristisch ist. Der vom in Prüfung befindlichen Prüfsubstrat 100 abgesandte Schall wird mit der Referenzschablone verglichen. Beim Überschreiten von kritischen Abweichungsgrenzen des aufgenommenen Schallbildes des zu prüfenden Substrates im Vergleich zur Referenzschablone, wird das zu prüfende Substrat als fehlerhaft eingestuft.

Als besonders bevorzugt hat sich auch erwiesen, die Schwingungserregung des Prüfsubstrats 100 mittels der Handhabungseinrichtung 10 selbst zu bewerkstelligen. Beispielsweise ist die Handhabungseinrichtung 10 als Greifeinrichtung 10, z. B. als Sauggreifer mit einem oder mehreren Saugnäpfen ausgebildet, welche das Prüfsubstrat 100 mittels Unterdruck halten. Besonders bewährt hat sich hierbei ein einzelner Sauggreifer, welcher das Prüfsubstrat 100 in etwa mittig hält. Je nach Größe des Prüfsubstrats 100 ist jedoch auch eine Anordnung mehrer Sauggreifer denkbar.

Als besonders bevorzugt zur Schwingungserregung des Prüfsubstrates 100 hat sich erwiesen, in der Prüfkammer den Unterdruck, mittels dem das Prüfsubstrat 100 vom Sauggreifer 10 gehalten wird, für eine bestimmte Zeit ausgehend von einem Nennunterdruck etwas abzusenken, d. h. den absoluten Druck etwas zu steigern, so dass sich das Prüfsubstrat 100 etwas vom Sauggreifer löst, sich jedoch nicht vollständig vom Sauggreifer 10 trennen kann. Anschließend wird der Sauggreifer, bevorzugt schlagartig, wieder mit einem niedrigeren Druck, z. B. dem Nennunterdruck, beaufschlagt, so dass ein ruckartiges Ansaugen des Prüfsubstrats 100 bis zu einem Anschlag, z. B. dem Saugnapfboden, erfolgt. Durch das Auftreffen auf den Anschlag erfährt das Prüfsubstrat 100 eine Schwingungsanregung, wobei Schall in Richtung des Schallsensors 11 abgestrahlt wird. Dieser Schall weist je nach Prüfsubstrattyp einen charakteristischen Frequenzverlauf und/oder einen charakteristischen Amplituden-Zeitverlauf auf. Zumindest einer dieser Verläufe wird vom Schallsensor 11 aufgenommen und einer Auswerteeinrichtung (nicht gezeigt) zugeleitet, in der das aufgenommene "Schallbild" mit einem charakteristischen "Schallbild" eines qualitativ für gut befundenen Prüfsubstrats 100 verglichen wird.

Weiterhin kann die Schwingungsanregung des Prüfsubstrats 100 durch ein z. B. mechanisches Anklopfen oder Anschlagen auf das Prüfsubstrat 100 erfolgen, wobei dies bevorzugt ohne Trennung des Prüfsubstrats 100 von der Handhabungseinrichtung 10 durch geeignete Anregungsmittel, z. B. einem Schlagkörper, erfolgt.

Die im Stand der Technik gemäß der DE 103 45 577 A1 vorgeschlagene Erregung mittels eines Schallgenerators hat sich als nachteilig erwiesen, da der vom Schallgenerator erzeugte Schall über das Kopplungsmedium Luft auf das Prüfsubstrat indirekt übertragen wird. Dies führt je nach Änderung z. B. der Luftfeuchtigkeit, des Luftdrucks zu einer variierenden Anregung des Prüfsubstrats, was zu messtechnischen Problemen bei der Erkennung des "Schallbilds" des zu prüfenden Substrats führt. Im Gegensatz zu einer solchen indirekten Schwingungsanregung über ein Kopplungsmedium, wie sie in der DE 103 45 577 A1 vorgeschlagen wird, hat sich eine direkte Schwingungsanregung gemäß der Erfindung bewährt, welche das Prüfsubstrat 100 durch direkte mechanische Einwirkung zum Schwingen anregt.

Dies bewirkt eine hohe Reproduzierbarkeit der Schwingungsanregung des Prüfsubstrats 100 und somit eine erleichterte messtechnische Auswertung des durch das Prüfsubstrat 100 abgestrahlten Schallsignals.

Gemäß einer weiteren alternativen Ausführungsform sind die in Figur 1 getrennt dargestellten Ablageeinrichtungen 4, 5, 6 zu einer einzigen Ablageeinrichtung für Ausschuss-Prüfsubstrate zusammengefasst.

Weiterhin hat sich als besonders vorteilhaft erwiesen, das Prüfsubstrat 100 in einem ersten Schritt in Schwingung zu versetzen und nachdem eine Schwingung ins Substrat 100 eingetragen wurde, die Messauswertung zu beginnen. Dies hat den Vorteil, dass die Schwingungsanregung selbst nicht störend, die Messwerte verfälschend wirkt. Somit wird besonders bevorzugt mittels dem Schallsensor 11 eine zeitlich abklingende Schwingung des Prüfsubstrats 100 erfasst.

Im folgenden wird anhand der Figur 2 beispielhaft eine Ausführungsform einer erfindungsgemäßen Vorrichtung zum Durchführen des Verfahrens beschrieben. Die Vorrichtung weist eine Verfahreinheit 10a, an welcher ein Greifmittel, z. B. die Handhabungseinrichtung 10, welche als Sauggreifer ausgebildet ist, angeordnet ist. Die Verfahreinheit 10a und die Handhabungseinrichtung 10 bilden eine sogenannte Handlingseinrichtung. Die Verfahreinheit 10a entnimmt mittels dem Sauggreifer 10 aus einem der Vorratsbehälter 20 ein Prüfsubstrat 100 und führt es einer Prüfkammer 21 zu. In der Prüfkammer 21 erfolgt die direkte Schwingungsanregung des Prüfsubstrats 100 beispielsweise, wie oben beschrieben, durch den Sauggreifer 10 selbst.

In der Prüfkammer 21 ist der Akustiksensor 11 angeordnet. Der Akustiksensor 11 empfängt den vom Prüfsubstrat 100 ausgesandten Schall, welcher bevorzugt im hörbaren Bereich liegt, und führt ein korrespondierendes Messsignal einer Mess- und Auswerteeinheit 23 zu. In der Mess- und Auswerteeinheit 23 erfolgt eine Auswertung des Messsignals, in dem es mit einem Referenzsignal eines Referenz-Prüfsubstrats 100 verglichen wird.

Weiterhin weist eine erfindungsgemäße Vorrichtung eine Kamera 24 auf mittels der eine Überprüfung des Prüfsubstrats 100 auf optische Qualitätsmerkmale, z. B. auf Fehlerfreiheit des Oberflächenbilds, auf Fehlerfreiheit der Beschnittkontur und/oder auf Zugehörigkeit zu einem bestimmten Farbwert erfolgt. Die Kamera 24 ist mit einer Bildverarbeitungseinrichtung 25 verbunden, in der ein Kamerasignal mit einem oder mehreren optischen Referenzsignalen eines Referenzprüfsubstrats verglichen werden. Bevorzugt ist die Bildverarbeitungseinrichtung 25 in der Kamera 24 integriert ausgebildet.

Die Kamera 24 ist beispielsweise oberhalb eines Vorratsbehälters 20, in dem die Prüfsubstrate 100 stapelförmig angeordnet sind, angeordnet. Hierdurch ist es möglich, jeweils das oberste Prüfsubstrat eines Vorratsbehälters bereits schon vor der Aufnahme des Prüfsubstrats durch die Handhabungseinrichtung 10 einer Prüfung auf optische Qualitätsmerkmale zu unterziehen.

Die Vorratsbehälter 20 weisen bevorzugt mittel zur Vorratsüberwachung und Signalisierungsmittel zur Anzeige des Füllstands Vorratsbehälters 20 auf. Weiterhin besitzt die Vorrichtung zumindest einen Ablagebehälter 30 zur Aufnahme von Ausschuss-Prüfsubstraten 100a. Vorteilhafterweise sind mehrere Ablagebehälter 30 vorgesehen, so dass eine Sortierung der Ausschuss-Prüfsubstrate 100a nach Fehlertyp erfolgen kann. Beispielsweise sind in einem ersten Ablagebehälter alle Ausschuss-Prüfsubstrate 100a angeordnet, bei denen die Schallprüfung auf Haarrisse negativ verlaufen ist. In einem zweiten Ablagebehälter können beispielsweise alle diejenigen Ausschuss-Prüfsubstrate 100a abgelegt sein, welche Konturfehler, z. B. Ausbrüche oder Fehler im Oberflächenbild oder dergleichen aufweisen. Somit ist es erleichtert, die Häufigkeit des Auftretens eines bestimmten Fehlertyps zu erkennen und ggf. die Ausschuss-Prüfsubstrate 100a nach Fehlern geordnet zum Lieferanten zurück schicken zu können.

Weiterhin weist die Vorrichtung vorteilhafterweise Schnittstellen zu einem Qualitätsmanagementsystem (nicht gezeigt) auf, in dem das Prüfergebnis eines jeden Prüfsubstrats zum Zwecke der Dokumentation abgelegt werden kann. Des weiteren besitzt die erfindungsgemäße Vorrichtung zweckmäßigerweise zumindest ein Fördermittel 31, mittels dem Prüfsubstrate 100, welche alle Prüfkriterien erfüllt haben der weiteren Verarbeitung, z. B. Herstellprozess einer Solarzelle zugeführt werden können. Die Ablagebehälter 30 weisen bevorzugt ebenfalls eine Füllstandsüberwachung und entsprechende Signalmittel zur Anzeige des Füllstands Ablagebehälters auf.

Außerdem besitzt die erfindungsgemäße Vorrichtung Mittel zur Schwingungsanregung des Prüfsubstrats 100 in der Prüfkammer 21. Die Mittel zur Schwingungsanregung können z. B. ein Anregungskörper (nicht gezeigt) sein, welcher zur Schwingungsanregung des Prüfsubstrats 100 in direkten Kontakt mit dem Prüfsubstrat 100 bringbar ist, so dass z. B. Körperschall des Anregungskörpers auf das Prüfsubstrat 100 übertragen werden kann. Weiterhin können die Mittel zum Schwingungsanregen des Prüfsubstrats 100 beispielsweise ein Klöppel oder ein Schlaghammer oder dergleichen sein, mittels dem eine direkte mechanische Schwingungsanregung des Prüfsubstrats 100 erfolgen kann. Gemäß einer besonders bevorzugten Ausführungsform ist die Handhabungseinrichtung 10 als Vakuumgreifer (Sauggreifer) ausgebildet, welcher mit zumindest einem Saugnapf das Prüfsubstrat 100 greifen kann. Bevorzugt ist eine Steuereinrichtung zur Ansteuerung des Unterdrucks des Vakuumgreifers vorhanden, mittels der insbesondere kurzzeitige Unterdruckschwankungen auf den Sauggreifer ausübbar sind, so dass mittels dem Sauggreifer selbst eine Schwingungserregung des Prüfsubstrats 100 erfolgen kann. Bei dieser Ausführungsform ist besonders vorteilhaft, dass der Vakuumgreifer 10 eine Funktionsbündelung sowohl hinsichtlich des Prüfsubstratstransportes (Materialtransport) als auch hinsichtlich der Schwingungserregung des Prüfsubstrats 100 erfüllt.

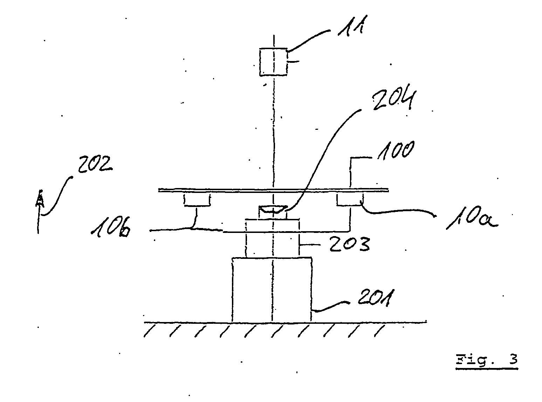

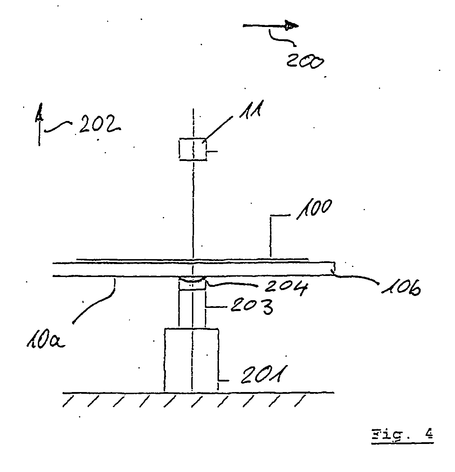

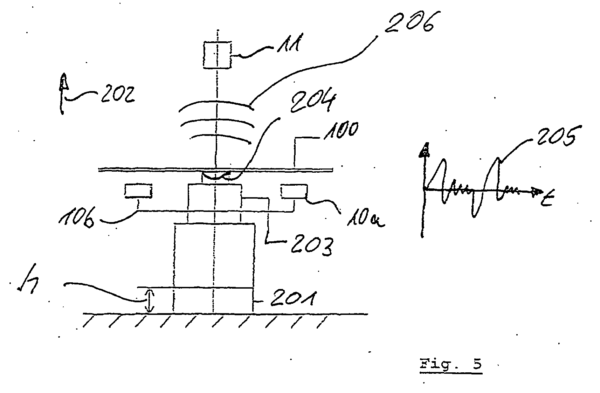

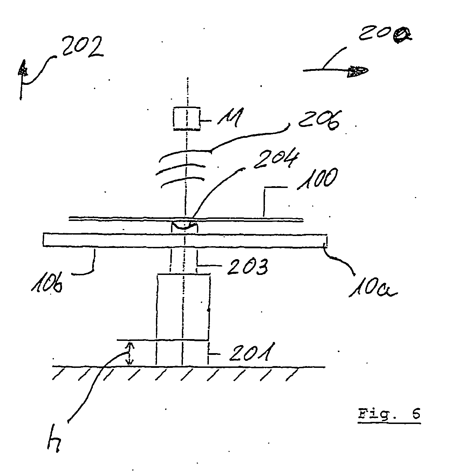

In Figur 3 bis Figur 6 ist eine zweite Ausführungsform einer erfindungsgemäßen Vorrichtung zum Durchführen des Verfahrens dargestellt. Elemente gleicher Funktion im Vergleich zur Ausführungsform gemäß Figur 2 sind mit gleichen Bezugszeichen gekennzeichnet.

Die erfindungsgemäße Vorrichtung weist eine als Parallelbandförderer ausgebildete Fördereinrichtung 10a auf, auf der die Prüfsubstrate 100 entlang einer Förderrichtung 200 transportierbar sind. In einer Vorderansicht zwischen einem Förderbandpaar 10b und unterhalb der Prüfsubstrate 100 befindet sich eine Verfahreinheit 201, welche in einer Richtung 202, insbesondere vertikal zur Förderrichtung 200 ausfahrbar ist. Die Verfahreinheit 201 trägt einen Schwingerreger 203, welcher insbesondere über einen Saugnapf 204, der als Schwingungskopplungsglied wirkt mit dem Prüfsubstrat 100 koppelbar ist. Beabstandet oberhalb des Prüfsubstrats 100 ist der Schallsensor 11 angeordnet.

Wenn mittels der Fördereinrichtung 10a ein Prüfsubstrat 100 über dem Schwingerreger 203 angeordnet ist, wird mittels der Verfahreinheit 201 der Schwingerreger 203 zusammen mit dem Saugnapf 204 um eine Höhe h angehoben, so dass der Saugnapf 204 unterseitig mit dem Prüfsubstrat 100 in Kontakt gelangt und dieses ein Stück von der Fördereinrichtung 10a abhebt. Hierdurch kann das Prüfsubstrat 100 unbeeinträchtigt durch das Förderbandpaar 10b frei schwingen. In dieser Stellung wird mittels dem Schwingerreger 203 über dem Saugnapf 204 ein hinsichtlich des Frequenz- und/oder Amplitudenverlaufs definiertes Schwingungssignal 205 auf das Prüfsubstrat 100 übertragen. Das Prüfsubstrat 100 wird hierdurch zum Schwingen angeregt und sendet Schallwellen 206 ab, die vom Akustiksensor 11 aufgenommen werden. Nach der Aufnahme der abgesandten Schallwellen 206 durch den Akustiksensor 11 wird mittels der Verfahreinheit 201 der Schwingerreger 203 und der Saugnapf 204 wieder um die Höhe h nach unten gefahren, so dass das Prüfsubstrat 100 wiederum auf der Fördereinrichtung 10a aufliegt und in Förderrichtung 200 weiter transportiert wird.

Auch diese Ausführungsform gemäß den Figuren 3 bis 6 verwirklicht das erfindungsgemäße Prinzip, ein definiertes Schwingungsmuster, d.h. eine definierte Erregungsschwingung in das Prüfsubstrat 100 direkt gekoppelt einzutragen und eine Schallemission des Prüfsubstrats 100 mittels eines Akustiksensors 11 aufzunehmen.

Gemäß weiterer vorteilhafter Ausführungsformen kann die Kopplung des Prüfsubstrats 100 mit dem Schwingerreger 203 anstelle über einen Saugnapf 204 auch über andere Kopplungselemente, z.B. ein Dreibein oder andere zur Auflage von Prüfsubstraten 100 geeignete Mittel erfolgen. Wesentlich ist, dass die durch den Schwingerreger 203 zur Verfügung gestellte mechanische Schwingung ohne Zwischenschaltung eines indirekten Mediums, wie z.B. Luft direkt gekoppelt auf das Prüfsubstrat 100 übertragen wird.

Durch die direkte Schwingungseinleitung der Erregerschwingung in das Prüfsubstrat 100 können Umwelteinflüsse, z.B. unterschiedliche Luftdruck-, Luftfeuchtigkeitsgegebenheiten in der Umgebung wie auch beispielsweise der Einfluss von Geräuschquellen in der Umgebung ausgeschaltet werden. Als besonders bevorzugt hat sich die Beaufschlagung des Prüfsubstrats 100 mit einen sogenannten Frequenzsweep, d.h. einen zeitlich definierten Schwingungsverlauf in den Grenzen von z.B. 5 kHz bis 25 kHz, insbesondere 7 kHz bis 20 kHz, bewährt. Insbesondere vorteilhaft ist es, einen Frequenz- und Amplitudenverlauf zu wählen, der abweichend von einem idealen Sinusverlauf gewählt wird. Insbesondere können beispielsweise trapez- oder trapezähnliche, rechteck- oder rechteckähnliche, sägezahn- oder sägezahnähnliche oder hieraus kombinierte Frequenzverläufe verwendet werden. Die Auswertung des vom Akustiksensor 11 aufgenommenen Schalles 206 erfolgt anschließend mittels einer sogenannten Fourieranalyse. Hierbei hat sich als besonders vorteilhaft herausgestellt, dass bei der Verwendung eines Frequenzsweeps mit anschließender Fourieranalyse auch für die Schallaufnahme des Akustiksensors 11 in wirksamer Art und Weise Umgebungsgeräusche ausgeblendet werden, so dass diese keinen Einfluss auf das Messergebnis haben.

Selbstverständlich ist die im Rahmen der Figur 1 dargestellte zeitliche Abfolge der einzelnen Prüfoperationen 2, 3, 4 nicht limitierend zu verstehen. Die einzelnen Prüfoperationen können auch in einer zeitlich geänderten Aufeinanderfolge durchgeführt werden. Als besonders vorteilhaft hat sich jedoch erwiesen, zuerst alle diejenigen Prüfoperationen durchzuführen, welche zwischen einem verwertbaren Prüfsubstrat und einem Ausschuss-Prüfsubstrat unterscheiden. Als letzten Schritt ist vorteilhafterweise diejenige Prüfoperation vorgesehen, bei der eine Sortierung der Prüfsubstrate z. B. nach Oberflächenfarben erfolgt. Hierbei ist sichergestellt, dass der Sortieroperation nunmehr Prüfsubstrate zugeleitet werden, welche alle vorangegangen Fehlerprüfoperationen positiv durchlaufen haben.

Besonders vorteilhaft beim erfindungsgemäßen Verfahren und bei der erfindungsgemäßen Vorrichtung zum Durchführen des Verfahrens ist, dass die Eingangsprüfung von z. B. Siliziumscheiben für die Herstellung von Solarzellen vollautomatisch ohne manuelle Eingriffe einer Prüfperson durchführbar ist. Weiterhin ist von besonderem Vorteil, dass die Prüfung der Prüfsubstrate (Siliziumscheiben) objektiv, d. h. nach festgelegten Kriterien auch über lange Zeit hinweg, unabhängig von subjektiven Eindrücken einer Prüfperson erfolgt. Somit ist das Prüfergebnis hinsichtlich seiner Konstanz und Wiederholbarkeit verbessert. Weiterhin ist von besonderem Vorteil, dass das erfindungsgemäße Verfahren und die erfindungsgemäße Vorrichtung eine Möglichkeit bieten, die Prüfsubstrate zerstörungsfrei und schonend auf eine Mehrzahl von Prüfkriterien zu prüfen, so dass eine Beschädigung und/oder Zerstörung eines intakten Prüfsubstrats während dem Prüfvorgang ausgeschlossen ist.

Insbesondere ist das Verfahren und die Vorrichtung geeignet in eine bereits bestehende Herstelllinie eingegliedert zu werden, so dass eine sogenannte Inlinefähigkeit gewährleistet ist. Somit kann die Erfindung sowohl in neuen Produktionsanlagen eingebaut werden oder ergänzend zu bereits bestehenden Produktionsanlagen eingebunden werden.

## Patentansprüche

1. Verfahren zum Handhaben und Prüfen von Werkstücken, insbesondere von dünnen, plattenartigen Prüfsubstraten (100), wobei das Prüfsubstrat (100) zur Erkennung von Fehlern und/oder Beschädigungen in einer Prüfoperation (2) einer Schallprüfung unterzogen wird, wobei das Prüfsubstrat (100) in Schwingung versetzt wird und Schall, welcher vom Prüfsubstrat (100) abgegeben wird, mittels einem Schallsensor (11) gemessen und ein Messsignal einer Signalauswerteeinrichtung zugeführt und ausgewertet wird, **dadurch gekennzeichnet, dass** das Prüfsubstrat (100) zumindest einer weiteren Prüf- und/oder Sortieroperation (3, 4) zur Prüfung zumindest eines weiteren Prüfkriteriums und/oder zur Ermittlung zumindest eines Sortierkriteriums unterzogen wird.

2. Verfahren nach Anspruch 1, **dadurch gekennzeichnet, dass** mit Hilfe der weiteren Prüfoperationen optische Qualitätsmerkmale geprüft werden.

3. Verfahren nach Anspruch 1 und/oder 2, **dadurch gekennzeichnet, dass** eine Sortieroperation durchgeführt wird, in der das Prüfsubstrat (100) einer Farbsortierung unterworfen wird.

4. Verfahren nach einem der vorangegangenen Ansprüche, **dadurch gekennzeichnet, dass** die Schallprüfung zur Erkennung von Haarrissen erfolgt.

5. Verfahren nach einem der vorangegangenen Ansprüche, **dadurch gekennzeichnet, dass** das Prüfsubstrat (100) durch direkten Kontakt mit einem Anregungsmittel in Schwingung versetzt wird.

6. Verfahren nach einem der vorangegangenen Ansprüche, **dadurch gekennzeichnet, dass** die Messung des vom Prüfsubstrat (100) abgegebenen Schalls erst nach Beendigung der Schwingungserregung erfolgt.

7. Verfahren nach einem der vorangegangenen Ansprüche, **dadurch gekennzeichnet, dass** das Prüfsubstrat (100) mittels einer Handhabungseinrichtung (10) den Prüf- und/oder Sortieroperationen zugeführt wird.

8. Verfahren nach einem der vorangegangenen Ansprüche, **dadurch gekennzeichnet, dass** Prüfergebnisse über eine Datenschnittstelle einem Qualitätsmanagementsystem zugeführt werden und/oder dokumentiert werden.

9. Verfahren nach einem der vorangegangenen Ansprüche, **dadurch gekennzeichnet, dass** eine Überprüfung einer Umfangskontur des Prüfsubstrats (100) erfolgt.

10. Verfahren nach einem der vorangegangenen Ansprüche, **dadurch gekennzeichnet, dass** eine Überprüfung eines Oberflächenbilds des Prüfsubstrats (100) erfolgt.

11. Verfahren nach einem der vorangegangenen Ansprüche, **dadurch gekennzeichnet, dass** eine Sortieroperation des Prüfsubstrats (100) nach Farben erfolgt.

12. Verfahren nach einem der vorangegangenen Ansprüche, **dadurch gekennzeichnet, dass** die Sortieroperation zeitlich nach der oder den Prüfoperationen durchgeführt wird.

13. Verfahren nach einem der vorangegangenen Ansprüche, **dadurch gekennzeichnet, dass** das Prüfsubstrat (100) mit positivem Prüfergebnis mittels der Handhabungseinrichtung (10) einen nachgeschalteten Herstellungsprozess zugeführt wird.

14. Verfahren nach einem der vorangegangenen Ansprüche, **dadurch gekennzeichnet, dass** das Prüfsubstrat (100) mit negativem Prüfungsergebnis einer Ausschussablage zugeführt wird.

15. Verfahren nach einem der vorangegangenen Ansprüche, **dadurch gekennzeichnet, dass** Prüfsubstrate (100) mit negativem Prüfergebnis nach Fehlern sortiert mehreren Ausschussablagen zugeführt werden.

16. Verfahren nach einem der vorangegangenen Ansprüche, **dadurch gekennzeichnet, dass** das Prüfsubstrat (100) mittels einem definierten, prüfsubstratspezifischen Frequenz- und/oder Amplitudenverlauf erregt wird.

17. Verfahren nach einem der vorangegangenen Ansprüche, **dadurch gekennzeichnet, dass** die Erregungsschwingung einen zeitlich definierten Schwingungsverlauf in den Grenzen von z.B. 5 kHz bis 25 kHz, insbesondere 7 kHz bis 20 kHz, besitzt.

18. Verfahren nach einem der vorangegangenen Ansprüche, **dadurch gekennzeichnet, dass** eine Erregungsfrequenz verwendet wird, die sich von einem idealen Sinusverlauf unterscheidet und insbesondere trapez- oder trapezähnlich, rechteck- oder rechteckähnlich und/oder sägezahn- oder sägezahnähnlichen Frequenzverlauf hat.

19. Verfahren nach einem der vorangegangenen Ansprüche, **dadurch gekennzeichnet, dass** das Messsignal des Akustiksensors (11) mittels einer Fourieranalyse verarbeitet wird.

20. Vorrichtung zum Durchführen des Verfahrens nach einem oder mehreren der vorangegangenen Ansprüche 1 bis 19, mit einer Handhabungseinrichtung (10) zur Handhabung eines Prüfsubstrats (100), mit einer Einrichtung zum Schwingungsanregen des Prüfsubstrats (100) und einem Schallsensor (11) zur Aufnahme von Schall, welcher vom schwingungsangeregten Prüfsubstrat (100) ausgesandt wird, um das Prüfsubstrat (100) einer Schallprüfung zu unterziehen, **dadurch gekennzeichnet, dass** zumindest ein weiteres Prüfmittel und/oder Sortiermittel (24) vorhanden ist, mit dem ein weiteres Prüfkriterium überprüft und/oder ein weiteres Sortierkriterium ermittelt werden kann.

21. Vorrichtung nach Anspruch 20, **dadurch gekennzeichnet, dass** das Prüf- und/oder Sortiermittel (24) eine Kamera zur optischen Prüfung/Sortierung der Prüfsubstrate (100) ist.

22. Vorrichtung nach Anspruch 20 und/oder 21, **dadurch gekennzeichnet, dass** die Einrichtung zum Schwingungsanregen ein Körperschall aufweisender Anregungskörper ist.

23. Vorrichtung nach einem der Ansprüche 20 bis 22, **dadurch gekennzeichnet, dass** die Einrichtung zum Schwingungsanregen die Handhabungseinrichtung (10), z. B. ein Sauggreifer ist.

24. Vorrichtung nach einem der Ansprüche 20 bis 23, **dadurch gekennzeichnet, dass** die Einrichtung zum Schwingungsanregen ein Klöppel oder ein Schlaghammer ist.

25. Vorrichtung nach einem der Ansprüche 20 bis 24, **dadurch gekennzeichnet, dass** Vorratsbehälter zum bevorraten von zu prüfenden und/oder zu sortierenden Prüfsubstraten (100) vorhanden sind.

26. Vorrichtung nach einem der Ansprüche 20 bis 25, **dadurch gekennzeichnet, dass** zumindest ein Ausschussablagebehälter vorhanden ist.

27. Vorrichtung nach einem der Ansprüche 20 bis 26, **dadurch gekennzeichnet, dass** eine Prüfkammer (21) vorhanden ist, in der die Schallprüfung erfolgt.

28. Vorrichtung nach einem der Ansprüche 20 bis 27, **dadurch gekennzeichnet, dass** die Handhabungseinrichtung (10) mit einer Verfahreinrichtung (10a) verbunden ist, so dass eine Handlingseinrichtung gebildet ist.

29. Vorrichtung nach einem der Ansprüche 20 bis 28, **dadurch gekennzeichnet, dass** die Verfahreinrichtung (10a) ein Industrieroboter oder ein Linearförderer oder dergleichen ist.

30. Vorrichtung nach einem der Ansprüche 20 bis 29, **dadurch gekennzeichnet, dass** die Vorrichtung eine Schnittstelle zu einem Qualitätsmanagementsystem und/oder zu einer Protokolliereinrichtung aufweist.

31. Vorrichtung nach einem der Ansprüche 20 bis 30, **dadurch gekennzeichnet, dass** der Schallsensor (11) in der Prüfkammer (21) angeordnet ist.

32. Vorrichtung nach einem der Ansprüche 20 bis 31, **dadurch gekennzeichnet, dass** mehrere Ablagebehälter (30) vorhanden sind, in denen Ausschuss-Prüfsubstrate (100a) nach Fehlern sortiert ablegbar sind.

33. Vorrichtung nach einem der Ansprüche 20 bis 32, **dadurch gekennzeichnet, dass** die Fördereinrichtung (10a) ein Parallelbandförderer ist, unterhalb dem eine Verfahreinheit (201) mit einem Schwingerreger (203) angeordnet ist.

34. Vorrichtung nach einem der Ansprüche 20 bis 33, **dadurch gekennzeichnet, dass** oberhalb der Fördereinrichtung (10a) der Schallsensor (11) angeordnet ist.

35. Vorrichtung nach einem der Ansprüche 20 bis 34, **dadurch gekennzeichnet, dass** der Schwingerreger (203) mittels einer Verfahreinheit (201) um eine Höhe (h) anhebbar ist, so dass ein Schwingungskopplungsglied, insbesondere ein Saugnapf (204) mit dem Prüfsubstrat (100) in Kontakt gelangt.

36. Vorrichtung nach einem der Ansprüche 20 bis 35, **dadurch gekennzeichnet, dass** der Schwingerreger (203) geeignet ist, einen zeitlich definierten Schwingungsverlauf, z.B. zwischen 5 kHz bis 25 kHz, insbesondere 7 kHz bis 20 kHz, abweichend von einem idealen Sinusverlauf in das Prüfsubstrat (100) einzutragen.

37. Vorrichtung nach einem der Ansprüche 20 bis 36, **dadurch gekennzeichnet, dass** der Schwingerreger (203) einen trapez- oder trapezähnlichen, rechteck- oder rechteckähnlichen und/oder sägezahn- oder sägezahnähnlichen oder einen hieraus kombinierten Frequenzverlauf erzeugt.
